# EUROPEAN PATENT SPECIFICATION

(11) **EP 4 044 572 B1**
(45) Date of publication and mention of the grant of the patent: **14.08.2024**
(21) Application number: 21218313.1
(22) Date of filing: 30.12.2021
(51) Int. Cl.: H04N 1/60, G06K 15/02, G06K 15/00

(54) **IMAGE FORMING APPARATUS, METHOD OF FORMING GRADATION PATCH, AND EVALUATION CHART OF THE IMAGE FORMING APPARATUS**
BILDERZEUGUNGSVORRICHTUNG, VERFAHREN ZUR FORMUNG EINES GRADATIONSPATCHES UND BEURTEILUNGSSCHEMA DER BILDERZEUGUNGSVORRICHTUNG
APPAREIL DE FORMATION D'IMAGES, PROCÉDÉ DE FORMATION DE PATCH DE GRADATION, ET TABLEAU D'ÉVALUATION DE L'APPAREIL DE FORMATION D'IMAGES

(30) Priority: 13.02.2021 JP 2021021358
(43) Date of publication of application: 17.08.2022
(73) Proprietor: Ricoh Company, Ltd., Tokyo 143-8555 (JP)
(72) Inventor: KAIMA, Nobuyoshi, Tokyo, 143-8555 (JP); ISHII, Tatsuya, Tokyo, 143-8555 (JP)
(74) Representative: J A Kemp LLP

(56) References cited:
- JP-A- 2019 014 051
- US-A1- 2007 002 344
- US-A1- 2011 149 316
- US-A1- 2018 338 067
- US-A1- 2019 268 502

## Description

### BACKGROUND

### Technical Field

Embodiments of the present disclosure relate to an image forming apparatus, a method of forming gradation patches, and an evaluation chart of the image forming apparatus.

### Background Art

Various known image forming apparatuses forms gradation patches for density correction on a sheet, causes an image reading device (e.g., inline sensor) to read the gradation patches, and performs correction based on the reading result.

A known image forming apparatus includes a print image analyzing unit and a patch image position determining unit. The print image analyzing unit analyzes the position of a print image to be formed in an image formation area of a sheet, on the sheet. The patch image position determining unit determines the position of a patch image for image correction to be formed in an area outside the image forming area on the surface of the sheet, based on the analysis result of the print image analyzing unit. For example, Japanese Unexamined Patent Publication No. 2018-005173.

In a case in which a reading target (density detection area) to be read by an image reading device (inline sensor) is disposed at a position close to the gradation patch that is not a reading target, the gradation patch cannot be read correctly. This phenomenon is known as "flare." In addition, as the difference in density of reading target increases, the level of an adverse effect due to flare becomes greater.

If the gradation patch is simply increased (widened) to prevent the adverse effect due to flare, the margin area is limited. Due to the limitation of the margin area, the real-time printing performance of the image forming apparatus is compromised, for example, the gradation patches are to be formed over multiple sheets. US 2019/268502 A1 discloses a colour tone control device and image forming apparatus. JP 2019 014051 A discloses an image processing device, image formation device, and program. US 2018/338067 A1 discloses a colour value correction control method, colour value correction control program, and image forming apparatus.

### SUMMARY

In view of the above-described disadvantages, an object of the present disclosure is to provide an image reading device to enhance the cleanability in an image reading device.

Embodiments of the present disclosure described herein provide a novel image forming apparatus including and image forming device and a control unit according to claim 1.

Further, embodiments of the present disclosure described herein provide a method of forming a plurality of gradation patches according to claim 10.

Further, embodiments of the present disclosure described herein provide an evaluation chart for an image forming apparatus according to claim 11.

According to the present disclosure, the real-time printing performance of the image forming apparatus is not impaired.

### BRIEF DESCRIPTION OF THE SEVERAL VIEWS OF THE DRAWINGS

Exemplary embodiments of this disclosure will be described in detail based on the following figures, wherein:
FIG. 1 is a side view of an image forming apparatus according to a first embodiment of the present disclosure;
FIG. 2 is a block diagram illustrating the image forming apparatus of FIG. 1;
FIGS. 3A and 3B are diagrams, each illustrating an evaluation chart of the image forming apparatus according to the first embodiment of the present disclosure;
FIG. 4A is a plan view of an arrangement of gradation patch pattern (gradation patch image) formed on a sheet by the image forming apparatus of FIG. 1;
FIG. 4B is a plan view of another arrangement of gradation patch pattern (gradation patch image) formed on the sheet by the image forming apparatus of FIG. 1;
FIG. 5 is a flowchart of a printing process (image forming process) of a gradation patch image (gradation patch pattern) executed by the controller, according to the first embodiment of the present disclosure;
FIG. 6 is a flowchart of an analyzing process of print data (print image) of FIG. 5;
FIG. 7 is a diagram illustrating a density information acquiring process in the flowchart of FIG. 6;
FIG. 8 is a flowchart of a patch process that determines a patch shape in the flowchart of FIG. 5;
FIG. 9 is a diagram illustrating a priority gradation determining process in the flowchart of FIG. 8;
FIG. 10 is a flowchart of the operations performed by an inspection device;
FIG. 11 is a diagram illustrating a gradation patch of the image forming apparatus according to a second embodiment of the present disclosure;
FIG. 12 is a diagram illustrating a priority gradation determining process according to the second embodiment of the present disclosure;
FIG. 13 is a diagram illustrating a gradation patch of an image forming apparatus according to a third embodiment of the present disclosure;
FIG. 14 is a diagram illustrating an operation performed by an image forming apparatus according to a fourth embodiment of the present disclosure;
FIG. 15 is a diagram illustrating an image forming apparatus according to a fifth embodiment of the present disclosure;
FIG. 16 is a diagram illustrating an operation performed by the image forming apparatus according to the fifth embodiment of the present disclosure;
FIG. 17 is a diagram illustrating an operation performed by an image forming apparatus according to a sixth embodiment of the present disclosure;
FIG. 18 is a flowchart of a printing process of gradation patch by the controller, according to the fifth embodiment of the present disclosure; and
FIG. 19 is a diagram illustrating a gradation patch pattern of an image forming apparatus according to a seventh embodiment of the present disclosure.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

It will be understood that if an element or layer is referred to as being "on," "against," "connected to" or "coupled to" another element or layer, then it can be directly on, against, connected or coupled to the other element or layer, or intervening elements or layers may be present. In contrast, if an element is referred to as being "directly on," "directly connected to" or "directly coupled to" another element or layer, then there are no intervening elements or layers present. Like numbers referred to like elements throughout. As used herein, the term "and/or" includes any and all combinations of one or more of the associated listed items.

Spatially relative terms, such as "beneath," "below," "lower," "above," "upper" and the like may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements describes as "below" or "beneath" other elements or features would then be oriented "above" the other elements or features. Thus, term such as "below" can encompass both an orientation of above and below. The device may be otherwise oriented (rotated 90 degrees or at other orientations) and the spatially relative descriptors herein interpreted accordingly.

The terminology used herein is for describing particular embodiments and examples and is not intended to be limiting of exemplary embodiments of this disclosure. As used herein, the singular forms "a," "an," and "the" are intended to include the plural forms as well, unless the context clearly indicates otherwise. It will be further understood that the terms "includes" and/or "including," when used in this specification, specify the presence of stated features, integers, steps, operations, elements, and/or components, but do not preclude the presence or addition of one or more other features, integers, steps, operations, elements, components, and/or groups thereof.

Referring now to the drawings, embodiments of the present disclosure are described below. In the drawings for explaining the following embodiments, the same reference codes are allocated to elements (members or components) having the same function or shape and redundant descriptions thereof are omitted below.

Next, a description is given of a configuration and functions of an image forming apparatus, a method of forming a plurality of gradation patches, and an evaluation chart of an image forming apparatus, according to an embodiment of the present disclosure, with reference to drawings. Note that identical parts or equivalents are given identical reference numerals and redundant descriptions are summarized or omitted accordingly.

Embodiments of the present disclosure are described below with reference to the attached drawings.

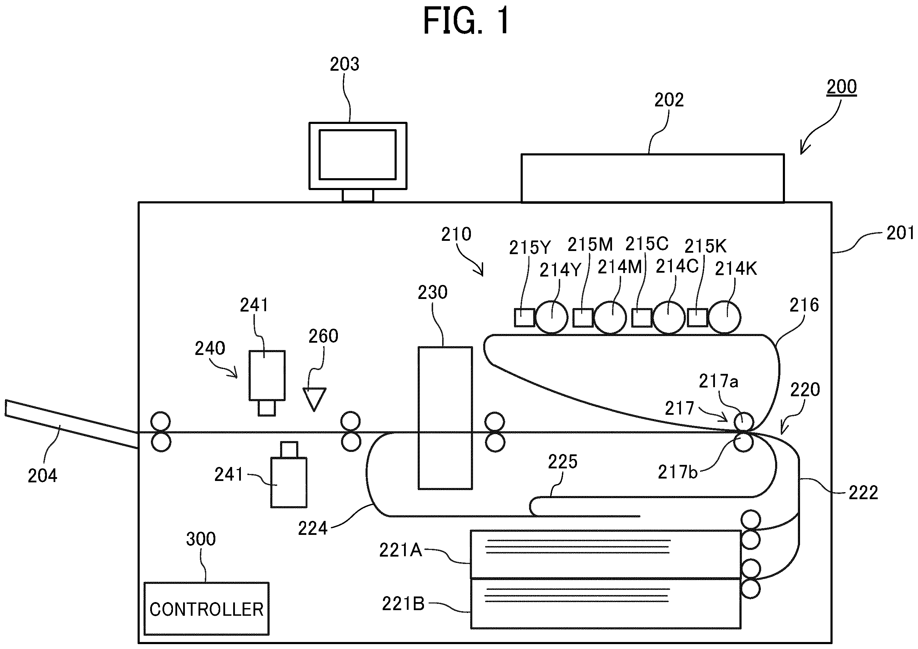

Initially, a description is given of a configuration and operation of an image forming apparatus according to a first embodiment of the present disclosure, with reference to FIG. 1.

FIG. 1 is a side view of an image forming apparatus according to the first embodiment of the present disclosure.

An image forming apparatus 200 includes a housing 201, a scanner 202, a control panel 203, and a sheet ejection device 204. The housing 201 is coupled to the scanner 202, the control panel 203, and the sheet ejection device 204.

The housing 201 includes an image forming device 210, a sheet conveyor 220, a fixing device 230, an inspection device 240, and a controller 300. The controller 300 controls an overall operation of the image forming apparatus 200 and is configured to form gradation patches on a sheet S.

The image forming device 210 forms latent images corresponding respective images of different colors and includes photoconductor units 214 (i.e., photoconductor units 214Y, 214M, 214C, and 214K) and image forming units 215 (i.e., image forming units 215Y, 215M, 215C, and 215K). For convenience, the photoconductor units 214Y, 214M, 214C, and 214K are referred to as a photoconductor unit 214 and the image forming units 215Y, 215M, 215C, and 215K are referred to as an image forming unit 215. The image forming unit 215 includes a charging unit, a laser diode (LD) writing unit, and a developing unit.

The photoconductor unit 214 is disposed along an intermediate transfer belt 216 having an endless loop. The intermediate transfer belt 216 is wound around at least one drive roller and a plurality of driven rollers. The intermediate transfer belt 216 moves between a primary transfer position and a secondary transfer position. The first transfer position is a position at which an image (toner image) developed on the photoconductor unit 214 is transferred and the secondary transfer position is a position at which the image (toner image) is transferred onto the sheet S.

A transfer unit 217 is disposed at the secondary transfer position. The transfer unit 217 includes a transfer roller 217a and a counter roller 217b disposed facing the transfer roller 217a. In the transfer unit 217, the toner image is transferred from the intermediate transfer belt 216 onto the sheet S, so that a color toner image is formed at a given position (i.e., image forming position) on the sheet S.

The sheet conveyor 220 includes sheet feed trays 221 (i.e., sheet feed trays 221A and 221B). Each of the sheet feed trays 221A and 221B functions as a sheet feeder that loads sheets to be used for image formation. The sheet conveyor 220 further includes a conveyance passage 222, a conveyance passage switcher 224, and a reversal passage 225. The conveyance passage 222 is defined by multiple roller pairs to convey the sheet S.

When executing an image forming process, under control of the predetermined control processing by the controller 300, the photoconductor units 214Y, 214M, 214C, and 214K of corresponding colors in the image forming units 215 are charged and exposed according to the original document, so as to form respective electrostatic latent images on the photoconductor units 214Y, 214M, 214C, and 214K.

Then, the developing units of the image forming units 215 supply respective toners onto the respective electrostatic latent images of the photoconductor units 214Y, 214M, 214C, and 214K, each corresponding to yellow (y), magenta (m), cyan (c), and black (k). By so doing, respective single toner images are formed.

Subsequently, the respective single toner images formed on the photoconductor units 214Y, 214M, 214C, and 214K of yellow, magenta, cyan, and black colors are primarily transferred one after another onto the surface of the intermediate transfer belt 216 while the intermediate transfer belt 216 is rotating.

On the other hand, the sheet S loaded in a selected one of the sheet feed trays 221A and 221B is separated by a pickup roller and conveyed along the conveyance passage 222. Then, the sheet S reaches the transfer unit 217.

As the sheet S reaches the transfer unit 217, the transfer process is executed. That is, the sheet S is conveyed in the predetermined conveyance direction of the sheet S while being nipped between the surface of the intermediate transfer belt 216 and the counter roller 217b. The transfer roller 217a biases (presses) the intermediate transfer belt 216 toward the counter roller 217b. When the sheet S passes between the intermediate transfer belt 216 and the counter roller 217b, toner images of respective single colors primarily transferred on the intermediate transfer belt 216 is secondarily transferred onto the sheet S to form a composite color image on the sheet S. In this transfer process, an image is formed on one side (first face) of the sheet S.

The sheet S having the color image formed on the first face by the image forming device 210 is further conveyed to the fixing device 230. The fixing device 230 performs a fixing operation on the sheet S on which the color toner image is formed. The fixing device 230 applies heat and pressure onto the conveyed sheet S to fix the transferred toner image to the sheet S.

In single-side printing, after the fixing device 230 fixes the toner image to the sheet S, the sheet S is conveyed to the inspection device 240.

In duplex printing, the sheet S is conveyed to the conveyance passage switcher 224. In the conveyance passage switcher 224, the travel direction of the sheet S is reversed, and the reversed sheet S is conveyed to the reversal passage 225. Thereafter, the sheet S is conveyed again to the transfer unit 217 so that the image formed on the intermediate transfer belt 216 is transferred onto the second face of the sheet S.

The sheet S having the image on the second face is further conveyed, so that the image on the second face of the sheet S is fixed to the sheet S in the fixing device 230. Then, the sheet S is conveyed to the inspection device 240.

A sheet passage sensor 260 is disposed upstream from the inspection device 240 in the conveyance direction of the sheet S to detect passage of the sheet S.

The inspection device 240 includes two (upper and lower) inline sensors 241 across the conveyance passage of the sheet S. Each of the inline sensors 241 functions as an image reader that reads an image formed on the sheet S. In duplex printing, the two inline sensors 241 read front and back faces of the sheet S at one time.

The inspection device 240 performs image analysis on the read image and sends color correction data to a printer controller 307. A detailed description of the printer controller 307 is deferred. Each of the inline sensors 241 is a line sensor that includes a plurality of photoelectric converting elements linearly aligned over the whole area in the width direction of the sheet S. The width direction of the sheet S is a main sheet conveyance direction that a direction orthogonal to the conveyance direction of the sheet S. The inspection device 240 also reads an image including the gradation patches.

After passing the inspection device 240, the sheet S is ejected to the sheet ejection device 204.

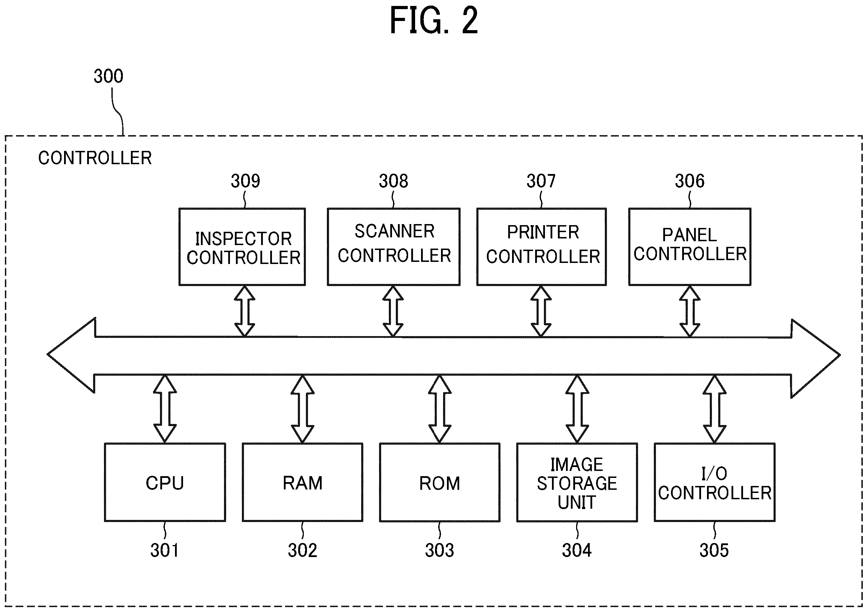

Next, a description is given of a controller of the image forming apparatus, with reference to FIG. 2.

FIG. 2 is a block diagram illustrating the image forming apparatus of FIG. 1.

The controller 300 includes a central processing unit (CPU) 301, a random access memory (RAM) 302, and a read-only memory (ROM) 303. The CPU 301 executes main control. The RAM 302 provides processing space used by the CPU 301 for processing. The ROM 303 stores programs used by the CPU 301.

The controller 300 includes an image storage unit 304, an input / output (I/O) controller 305, a panel controller 306, a printer controller 307, a scanner controller 308, and an inspector controller 309.

The scanner controller 308 controls the scanner 202. The printer controller 307 executes image processing on input image data, and controls laser diodes (LDs) of the image forming units 215 to expose light toward the photoconductor units 214. The printer controller 307 performs color correction and generates gradation patches for the color correction, based on the analysis result obtained by the inspector controller 309.

The panel controller 306 receives instructions from a user, so that processings such as copying, sending a facsimile, scanning, and storing images are executed.

The image storage unit 304 includes a fixed or detachable memory such as a hard disk drive (HDD), a secure digital (SD) card, and a universal serial bus (USB) flash drive. The image storage unit 304 stores image data acquired by the image forming apparatus 200, so that a user can use the image data for various processings.

The I/O controller 305 drives various motors, performs detection by sensors, and controls the fixing device, the photoconductors, and the intermediate transfer unit.

The inspector controller 309 controls the inline sensors 241 of the inspection device 240 and analyzes read image data.

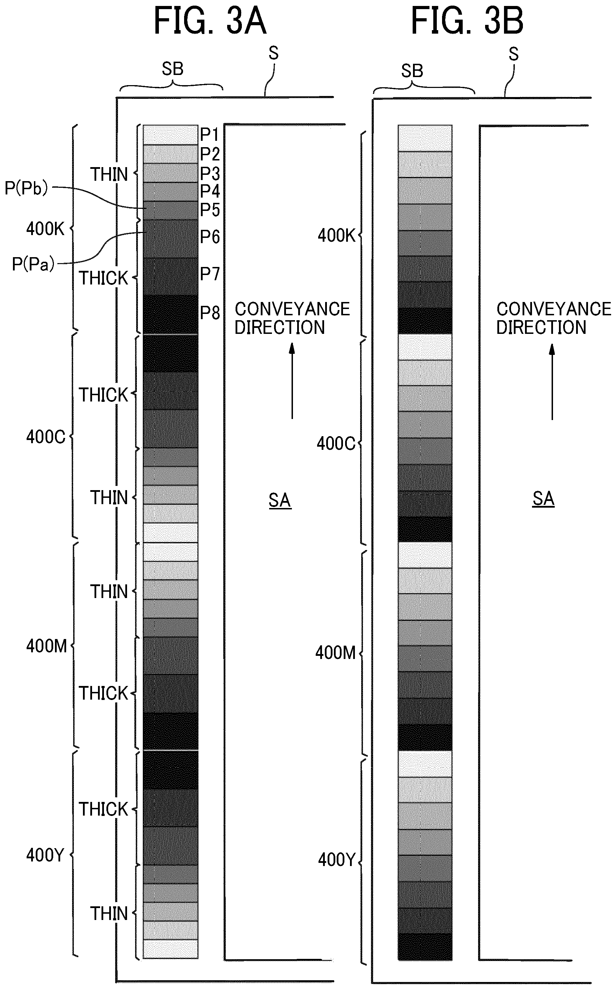

Next, a description is given of the gradation patches according to a first embodiment of the present disclosure, with reference to FIGS. 3A and 3B.

FIGS. 3A and 3B are diagrams, each illustrating an evaluation chart of the image forming apparatus according to the first embodiment of the present disclosure.

Specifically, FIG. 3A is a diagram illustrating an evaluation chart according to the first embodiment of the present disclosure, where the evaluation chart includes gradation patches supporting flare prevention. FIG. 3B is a diagram illustrating an evaluation chart according to a control sample, where the evaluation chart includes gradation patches not supporting flare prevention.

In the present embodiment, the controller 300 controls formation of gradation patches. The controller 300 acquires density information from image information of a printed image and determines the width of a gradation patch P in the conveyance direction of the sheet S based on the acquired density information.

Then, as illustrated in FIG. 3A, the controller 300 controls formation of gradation patch patterns 400 (i.e., gradation patch patterns 400K, 400C, 400M, and 400Y), each including multiple gradation patches P (i.e., gradation patches P1 to P8) for image correction (for example, color correction). The multiple gradation patches P have different widths from each other, in the conveyance direction of the sheet S.

Each of the gradation patch patterns 400 is formed by aligning the gradation patches P along the conveyance direction of the sheet S, in a margin area SB that is an area excluding an image area SA of the sheet S in a direction orthogonal to the conveyance direction of the sheet S, in other words, the main scanning direction.

Each of the gradation patches P is either a gradation patch Pa or a gradation patch Pb. The gradation patch Pa has a wider (thicker) width in the conveyance direction of the sheet S. The gradation patch Pb has a narrower (thinner) width in the conveyance direction of the sheet S. The width in the conveyance direction is equal to the width in the sub-sheet conveyance direction and is also referred to as a "sub-scanning width." In the example of the gradation patch pattern 400K of black color (K) illustrated in FIG. 3A, the gradation patches P1 to P5 are classified to the gradation patches Pb having a thinner (narrower) sub-scanning width, and the gradation patches P6 to P8 are classified to the gradation patches Pa having a thicker (wider) sub-scanning width.

To be more specific, as a relatively high gradation has a priority over a relatively low gradation, a gradation patch P of priority gradation falls in the gradation patch Pa having the thick sub-scanning width and a gradation patch P other than the gradation patch P of priority gradation, in other words, a gradation patch P of non-priority gradation, falls in the gradation patch Pb having the thin sub-scanning width. In other words, the sub-scanning width of a gradation patch P of priority gradation is wider (greater) than the sub-scanning width of a gradation patch P of non-priority gradation. Note that the priority gradation is defined based on print information and width information of the margin area.

As described above, the evaluation chart of the image forming apparatus according to the present embodiment is formed on a sheet by the image forming apparatus. The evaluation chart of the image forming apparatus includes a print image formed in the image area SA and the gradation patches P formed in the margin area SB outside the image area SA on the surface of the sheet S, the gradation patches P having different widths from each other in the conveyance direction of the sheet S.

As a result, the area of the gradation patch Pa of priority gradation increases not to be susceptible to flare.

When the gradation patch is formed over two or more sheets, the calculation time for obtaining a density correction value takes long, and color correction in image formation based on print information is delayed, in other words, the real-time printing performance is impaired. However, the width of each gradation patch P (gradation patches Pa and Pb) is determined such that the width (length) of the gradation patch patterns 400 of each color (i.e., gradation patch patterns 400K, 400C, 400M, and 400Y) in the conveyance direction of the whole sheet S is the same as the gradation patch patterns 400 (i.e., gradation patch patterns 400K, 400C, 400M, and 400Y) not supporting flare prevention illustrated in FIG. 3B.

With this operation, even when the gradation patches include various widths in the conveyance direction of the sheet S, in other words, various sub-scanning widths, the image forming apparatus according to the present embodiment achieves the real-time printing performance.

Further, the adjacent gradation patch patterns 400 of different colors (i.e., gradation patch patterns 400K, 400C, 400M, and 400Y) are formed to change in colors of the gradation patches, for example, in the conveyance direction of the sheet S. Specifically, the gradation patches in the odd-numbered gradation patch patterns 400 (i.e., gradation patch patterns 400K and 400M) change the colors from light density to dark density and the gradation patches in the even-numbered gradation patch patterns 400 (i.e., gradation patch patterns 400C and 400Y) change the colors from dark density to light density. By so doing, the difference in density is low between the adjacent gradation patches of the adjacent gradation patch patterns 400. In other words, the adjacent gradation patches in adjacent two different colors of gradation patches of the gradation patch patterns 400 (i.e., gradation patch patterns 400K and 400M) have a smaller density difference in color than non-gradation patches of a same color in the adjacent two different colors of gradation patches (i.e., gradation patch patterns 400K and 400M).

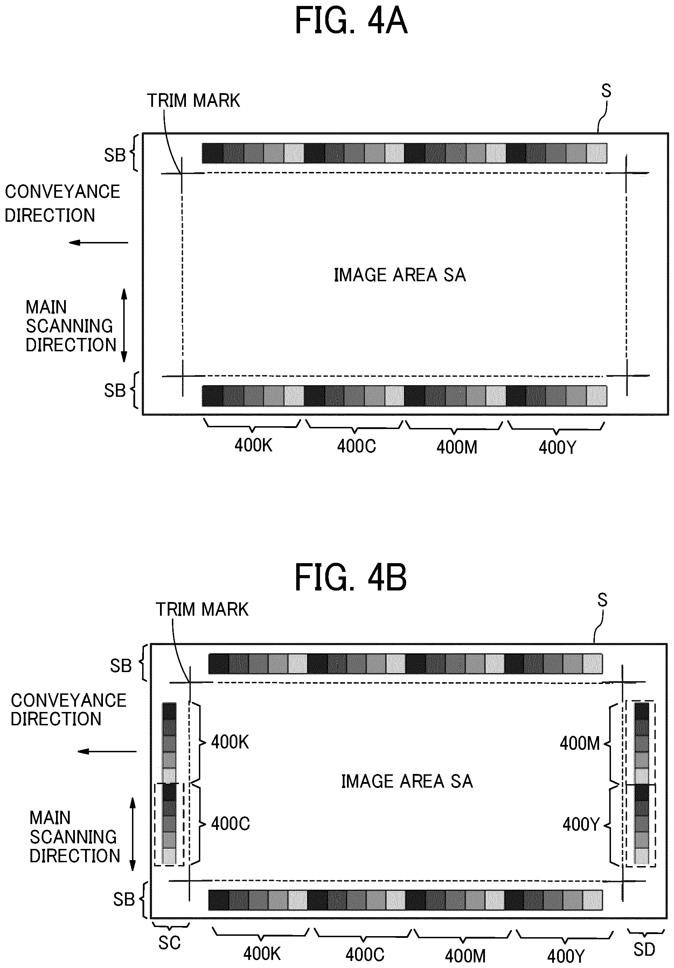

Next, a description is given of various arrangements of gradation patch patterns (gradation patches) formed on a sheet by an image forming apparatus, with reference to FIGS. 4A and 4B.

FIG. 4A is a plan view of an arrangement of a gradation patch pattern (gradation patches) formed on a sheet by the image forming apparatus 200. FIG. 4B is a plan view of another arrangement of a gradation patch pattern (gradation patches) formed on the sheet by the image forming apparatus 200.

Note that the description is given with general gradation patches having equal sub-scanning width and equal main scanning width.

The gradation patch patterns 400 (i.e., gradation patch patterns 400K, 400C, 400M, and 400Y) illustrated in FIG. 4A to be used for color correction are formed in the margin areas SB (side end margin areas) on both sides in a direction orthogonal to the conveyance direction of the sheet S, in other words, the main scanning direction. The gradation patch patterns 400 are formed outside the image area SA and in the margin area SB outside the cut lines of the sheet.

The margin area SB on each side of the sheet S has the width of (sheet size - image area) / 2. When the printing of the gradation patch patterns 400 in the main scanning direction shifts (deviates) within the margin area SB, the gradation patch patterns 400 partly exceed out of the side of the sheet S. The gradation patch patterns 400 are spaced from the image area SA so as not to adjoin the image area SA. As a result, the width narrower (smaller) than the width of (sheet size - image area) / 2 is determined as the length of the gradation patch patterns 400 in the main scanning direction.

In FIG. 4B, the gradation patch patterns 400 (i.e., gradation patch patterns 400K, 400C, 400M, and 400Y) to be used for color correction are formed in the margin areas SB on both sides of the sheet S in the direction orthogonal to the conveyance direction of the sheet S (main scanning direction), and another gradation patch patterns 400 (i.e., gradation patch patterns 400K, 400C, 400M, and 400Y) are formed in a margin area SC at the leading end of the sheet S and a margin area SD at the trailing end of the sheet S.

For example, when the sheet S is an A3-size sheet or an SRA3-size sheet, the length of the sheet S is longer in the sub-scanning direction, and the sheet S has an area for forming the gradation patch patterns 400 in the margin areas SB on both sides of the sheet S in the main scanning direction. For these reasons, the arrangement of the gradation patch patterns 400 on the margin areas SB has the priority over the arrangement of the gradation patch patterns 400 on the margin area SC and the margin area SD. Under this condition, when the gradation patch patterns 400 are fully formed in the margin areas SB alone, the gradation patch patterns 400 are arranged in the margin areas SB alone. On the other hand, when the gradation patch patterns 400 are not fully formed in the margin areas SB, the gradation patch patterns 400 are arranged in the margin areas SB, the margin area SC at the leading end of the sheet S, and the margin area SD at the trailing end of the sheet S.

Further, when the sheet S is an A4-size sheet in a portrait orientation and is the length of the sheet S is longer in the main scanning direction than in the sub-scanning direction, the arrangement of the gradation patch patterns 400 on the margin area SC at the leading end of the sheet S and the margin area SD at the trailing end of the sheet S has the priority over the arrangement of the gradation patch patterns 400 on the margin areas SB.

In addition, the gradation patch patterns 400 may be selectively formed, for example, in the margin areas SB alone at both side ends of the sheet S, in the margin area SC alone at the leading end of the sheet S, in the margin area SD alone at the trailing end of the sheet S, or in the margin area SC and the margin area SD.

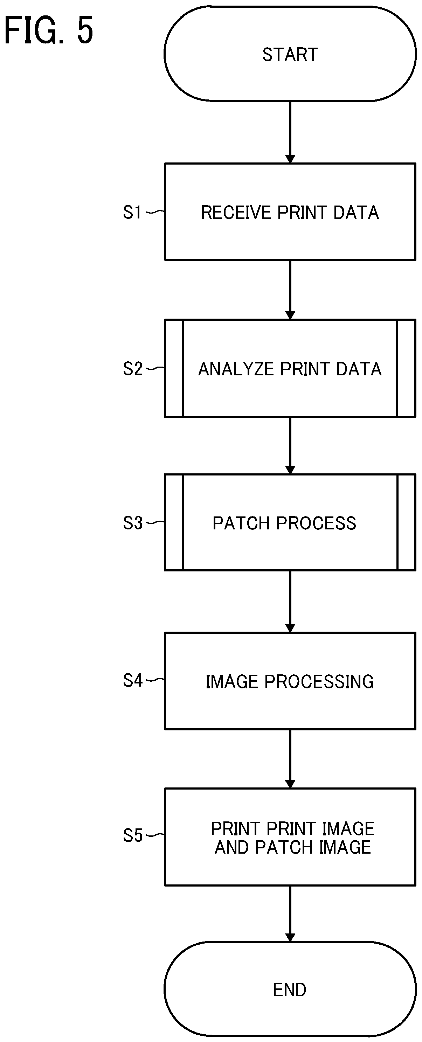

Next, a description is given of a printing process (image forming process) of the gradation patch image (gradation patch pattern) executed by a controller, according to the first embodiment of the present disclosure, with reference to FIG. 5.

FIG. 5 is a flowchart of a printing process (image forming process) of a gradation patch image (gradation patch pattern) executed by the controller, according to the first embodiment of the present disclosure.

The printing process (image forming process) is turned on in response to execution of printing by a user, and the controller 300 receives print data of a print image (step S1, which is simply referred to as "S1"). Then, the controller 300 analyzes the print data (S2), and then executes a patch process to determine the shape of the gradation patches P (patch shape) of the gradation patch patterns 400 based on the analysis result (S3).

Then, the controller 300 executes general image processing and color correction calculated from the reading result of the gradation patches P of the gradation patch patterns 400 by the inspection device 240 (S4).

Then, the controller 300 causes the print image to be printed in the image area SA on the surface of the sheet S and the gradation patch patterns 400 (patch image) including the gradation patches P in the margin area SB on the surface of the sheet S (S5).

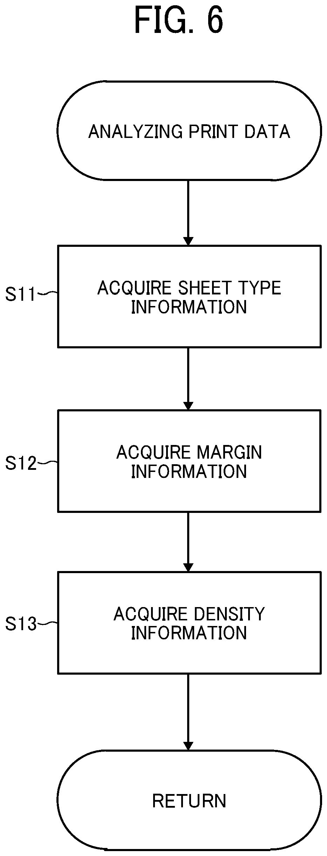

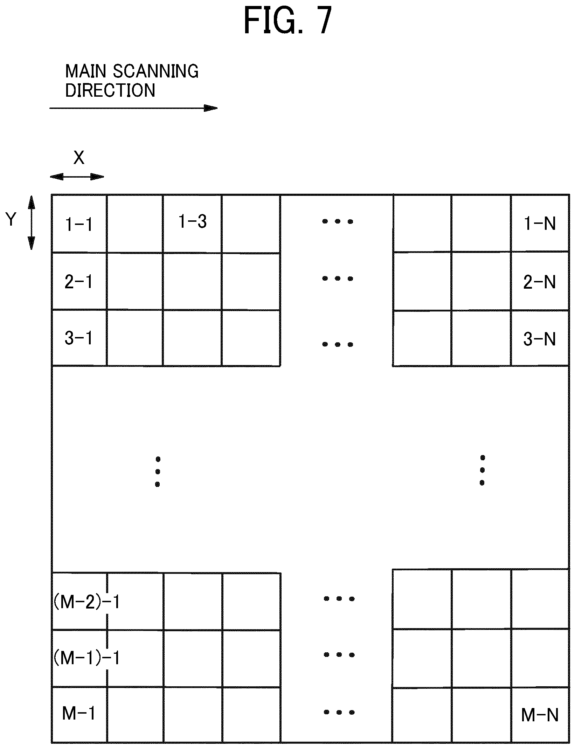

Next, a description is given of an analyzing process of print data (print image) of FIG. 5, with reference to FIGS. 6 and 7.

FIG. 6 is a flowchart of an analyzing process of print data (print image) of FIG. 5.

FIG. 7 is a diagram illustrating a density information acquiring process in the flowchart of FIG. 6.

First, the controller 300 acquires information related to the type of the sheet S, in other words, sheet type information (S11). The sheet type information is set in advance by the control panel 203 and stored in the ROM 303. For this reason, the sheet type information is acquired from the ROM 303.

Then, the controller 300 acquires margin information of the sheet S (S12). The margin information is the above-described information related to the margin areas SB on the side ends of the sheet S in the main scanning direction. Note that, when the gradation patch patterns 400 are arranged in the margin area SC at the leading end of the sheet S and the margin area SD at the trailing end of the sheet S, the controller 300 acquires information related to the margin areas SC and SD as well as the information related to the margin areas SB. Specifically, the margin information is a value set by a user through the control panel 203 and is acquired by the CPU 301.

Then, the controller 300 divides the print data (image data) of the print image by area unit to measure the gradation value and acquires density information (S13).

For example, as illustrated in FIG. 7, the image data is divided by area unit of the pixels in the main scanning direction X and the sub-scanning direction Y to measure the average of pixel densities of colors of cyan (C), magenta (M), yellow (Y), and black (K) of each area. The measured average value is a gradation value. The image data in FIG. 7 is divided into regions of "main scanning N × sub-scanning M."

Measuring the gradation value by area unit is an operation of converting the density of the target pixels in a divided region and measuring the average of pixel densities is an operation of dividing the converted value by the number of pixels in the region.

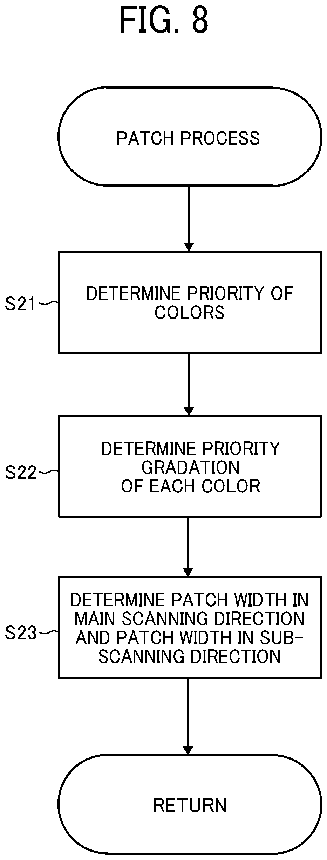

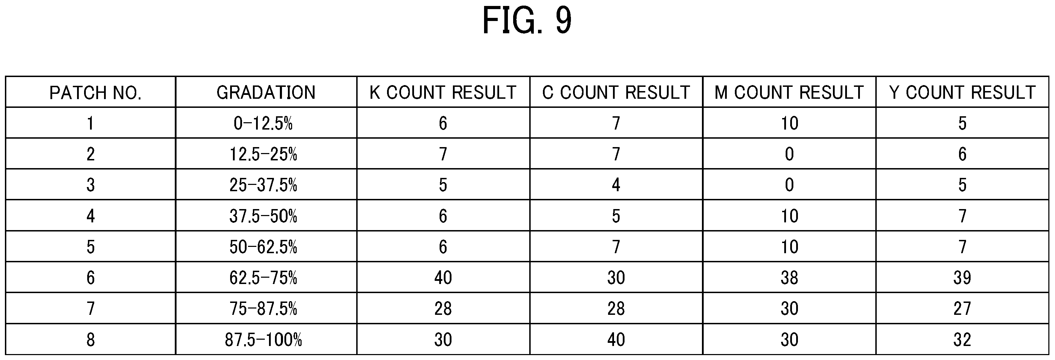

Next, a description is given of a patch process that determines a patch shape in the flowchart of FIG. 5, with reference to FIGS. 8 and 9.

FIG. 8 is a flowchart of the patch process that determines a patch shape.

FIG. 9 is a diagram illustrating a priority gradation determining process in the flowchart of FIG. 8.

First, the controller 300 determines the priority of colors in black (K), cyan (C), magenta (M), and yellow (Y) (S21). The controller 300 counts the number of regions having the density value greater than zero (0), from the measurement result of the density values of colors in black (K), cyan (C), magenta (M), and yellow (Y) of each divided region, and determines the priority of colors in the order of a larger number of the count values. The priority may be determined by multiplying the density by the region and accumulating the value of (Density × Number of Regions).

Next, the controller 300 determines the priority gradation in colors of black (K), cyan (C), magenta (M), and yellow (Y) (S22). As in S21, the controller 300 uses the measurement result of the density values of colors in black (K), cyan (C), magenta (M), and yellow (Y) of each divided region.

For example, as illustrated in FIG. 9, the gradation values from 0 to 255 are classified into eight (8) gradation range groups (No. 1 to No. 8). Then, the density values of colors of black (K), cyan (C), magenta (M), and yellow (Y) in the divided region are counted by eight (8) categories.

As a result, respective count results of colors of black (K), cyan (C), magenta (M), and yellow (Y), for example, as illustrated in FIG. 9 are obtained. In the present embodiment, the gradation having the count value equal to or greater than 20 counts is a priority gradation, and gradations of classification patch Nos. 6, 7, and 8 in the categories of each color of black (K), cyan (C), magenta (M), and yellow (Y) are determined to be priority gradations.

Next, the controller 300 determines the patch widths of the gradation patches P in the main scanning direction and the sub-scanning direction (S23).

The patch widths of the gradation patches P in the sub-scanning direction are determined according to the margin information. When a sufficient margin is given to the margin area, the gradation patch patterns 400 may have gradations of each color. When the margin area is not sufficient, the number of gradation patches and the patch width are determined so that the gradation patch patterns 400 are arranged from the priority colors and gradations to be included within the margin areas SB.

The reference patch width of the gradation patch P in the sub-scanning direction is determined based on the size of the sheet S. The reference patch width of each of the gradation patches P is a uniform width having no priority. From the priority of colors and the priority of the gradation values, the gradation patch P having a relatively low priority, in other words, the gradation patch P of non-priority gradation, is the gradation patch Pb having a relatively narrow sub-scanning width, and the gradation patch P having a relatively high priority, in other words, the gradation patch P of priority gradation is the gradation patch Pa having a relatively wide sub-scanning width.

For example, the sub-scanning width of the gradation patch P of non-priority gradation (i.e., the gradation patch Pb) is half of the reference patch width. The sub-scanning width of the gradation patch P of priority gradation (i.e., the gradation patch Pa) is a width of an amount left by setting the gradation patch Pb of non-priority gradation to be half of the reference patch width.

In other words, the following equations are satisfied: Sub-scanning Width of Gradation Patch Pb of Non-Priority Gradation = Reference Patch Width × 0.5; and Sub-scanning Width of Gradation Patch Pa of Priority Gradation = Reference Patch Width × 0.5 × Number of Gradation Patches Pb of Non-Priority Gradation / Number of Gradation Patches Pa of Priority Gradation + Reference Patch Width.

In the present embodiment, as illustrated in FIG. 3A, the priority is not given to colors but is given to gradations. The gradation patch P having a relatively high gradation value (e.g., Patch No. 6 to No. 8 in the classification table in FIG. 9) has a relatively thick (wide) sub-scanning width as priority gradation. On the other hand, the gradation patch P other than the gradation patch of priority gradation, in other words, the gradation patch P having a relatively low gradation value (e.g., Patch No. 1 to No. 5 in the classification table in FIG. 9), has a relatively thin (narrow) sub-scanning width. Further, the gradation patches P of the first color (e.g., the gradation patches P of the gradation patch pattern 400K in FIG. 3A) are generated in the order from light (thin) colors to dark (thick) colors and the gradation patches P of the second color (e.g., the gradation patches P of the gradation patch pattern 400C in FIG. 3A) are generated in the order from dark (thick) colors to light (thin) colors. By so doing, the difference in density of adjacent gradation patches P is reduced.

As described above, in the present embodiment, a gradation patch is formed by performing: a process of acquiring density information from the image information of a print image; a process of determining the width of each gradation patch in the conveyance direction of the sheet, the gradation patch being formed based on the acquired density information; and a process of forming multiple gradation patches on a margin area or margin areas of the sheet, the multiple gradation patches having different widths from each other in the conveyance direction of the sheet.

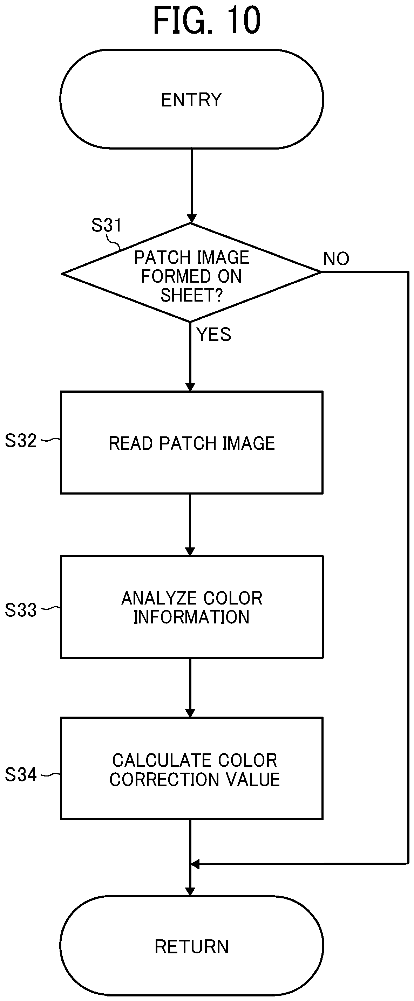

Next, a description is given of the operations performed by an inspection device, with reference to FIG. 10.

FIG. 10 is a flowchart of the operations performed by an inspection device.

This process is executed at the start of the printing operation in response to an instruction of execution of printing by a user. First, the inspector controller 309 determines whether a patch image is formed in the sheet S (S31). This determination is performed by checking patch image presence information from the CPU 301.

When a patch image is not formed on the sheet S (NO in S31), the process returns. On the other hand, when a patch image is formed on the sheet S (YES in S31), the patch image is read by the inline sensor 241 (S32). The read timing is controlled in response to detection of the sheet S by the sheet passage sensor 260.

Then, color information of the patch image is analyzed. That is, the average value of the density values of the patches of each patch image is calculated based on the reading result (S33). The position of each patch and the sub-scanning width of each patch may be correctly read by inputting information into the inspector controller 309 by the CPU 301.

Thereafter, the color correction value is calculated based on the difference between the target value and the read value (S34) and is transmitted to the printer controller 307. The printer controller 307 corrects the tint of the image based on the received color correction value.

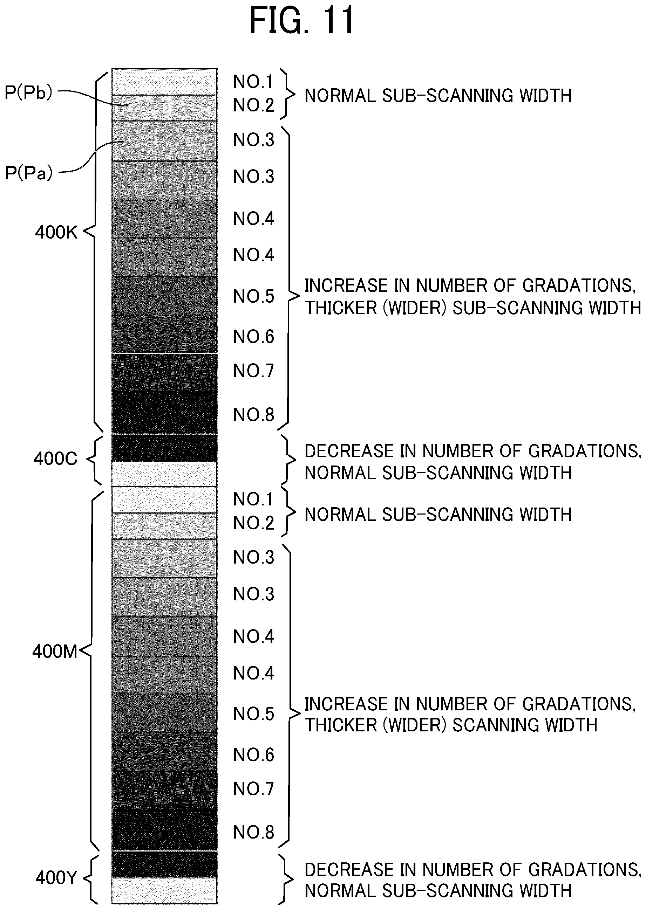

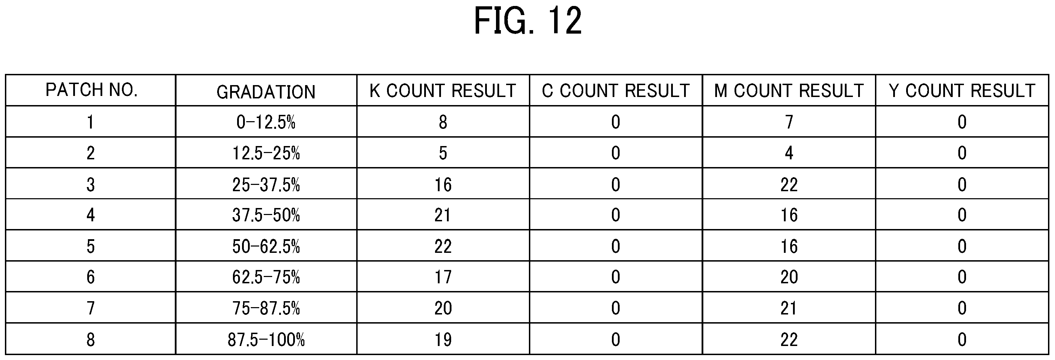

Next, a description is given of the image forming apparatus according to a second embodiment of the present disclosure, with reference to FIGS. 11 and 12.

FIG. 11 is a diagram illustrating the gradation patches of the image forming apparatus according to the second embodiment of the present disclosure.

FIG. 12 is a diagram illustrating a priority gradation determining process according to the second embodiment of the present disclosure.

In the present embodiment, the number of gradation patches P of priority color is increased, the number of gradation patches P of non-priority color is decreased, and the sub-scanning width of the gradation patches P of priority gradation is increased (thickened). Note that the operations in the present embodiment are performed according to a condition of whether the color is priority color or non-priority color and a condition of whether the gradation is priority gradation or non-priority gradation. However, the operations may be performed according to either one of these conditions.

According to the present disclosure, the real-time printing performance of the image forming apparatus is enhanced.

For example, among the colors of black (K), cyan (C), magenta (M), and yellow (Y), the colors of the gradation patches of the gradation patch patterns 400K and 400M illustrated in FIG. 11 are priority colors based on the count values of the density values of each area in the table of FIG. 12. That is, the colors of the gradation patches of the gradation patch patterns 400C and 400Y are non-priority colors. In other words, the plurality of gradation patches P includes the gradation patches P of the gradation patch patterns 400K and 400M of priority colors and the gradation patches P of the gradation patch patterns 400C and 400Y of non-priority colors.

Then, the colors of black (K) and magenta (M), each having high gradation, are set to be priority gradations and the number of gradation patches P of priority gradations is increased. By so doing, the number of priority gradations is increased, and the sub-scanning widths of the priority gradations are set to be relatively thick (wide). Note that the normal sub-scanning width of the gradation patch in the table of FIG. 12 is the same as the above-described reference patch width.

On the other hand, the colors of cyan and yellow are not priority colors and have no density. Due to the conditions, the number of gradation patches P of the color of cyan and the number of gradation patches P of the color of yellow are decreased. In this case, the difference in gradations of the gradation patches P of priority colors, which are black (K) and magenta (M), is smaller than difference in gradations of the gradation patches P of non-priority colors, which are cyan and yellow.

As a result, the whole gradation patches P of the whole colors (i.e., the gradation patch patterns 400K, 400C, 400M, and 400Y) illustrated in FIG. 11 are equal in the sub-scanning width to the gradation patches P of the gradation patch patterns 400K, 400C, 400M, and 400Y each having the reference patch width (normal sub-scanning width).

The relation of the gradation patches P of priority color, i.e., black and yellow, and the patch numbers (No) of classification of gradations is described in the table of FIG. 12. In this example, the gradation patches P corresponding to Nos. 3 and 4 in the table in FIG. 12 are respective two (multiple) gradation patches P having different gradation values from each other, as illustrated in FIG. 11. By using multiple gradation patches P, the accuracy in detection and correction is more enhanced than the rest of the gradation patches P.

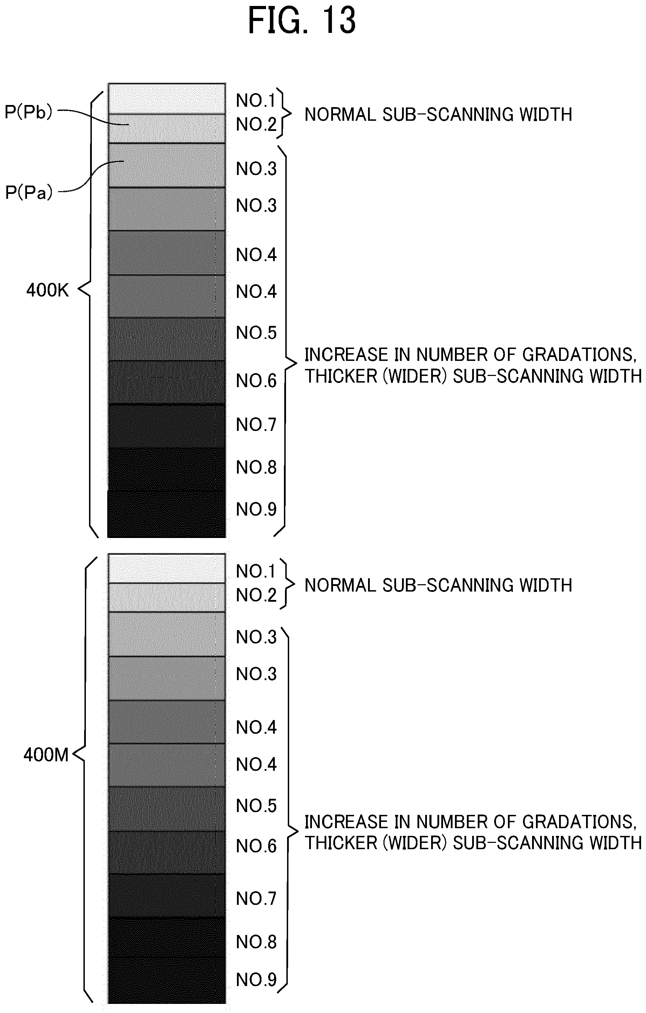

Next, a description is given of an image forming apparatus according to a third embodiment of the present disclosure, with reference to FIG. 13.

FIG. 13 is a diagram illustrating gradation patches of an image forming apparatus according to the third embodiment of the present disclosure.

In the present embodiment, when the colors of cyan and yellow have no density as in the count results in the table in FIG. 12 that is referred to in the second embodiment, the gradation patches of the colors of cyan and yellow are not formed. In other words, the configuration of the present embodiment does not form the gradation patches of non-priority colors, in other words, the gradation patches other than the gradation patches of priority colors.

According to the present disclosure, the real-time printing performance of the image forming apparatus is enhanced.

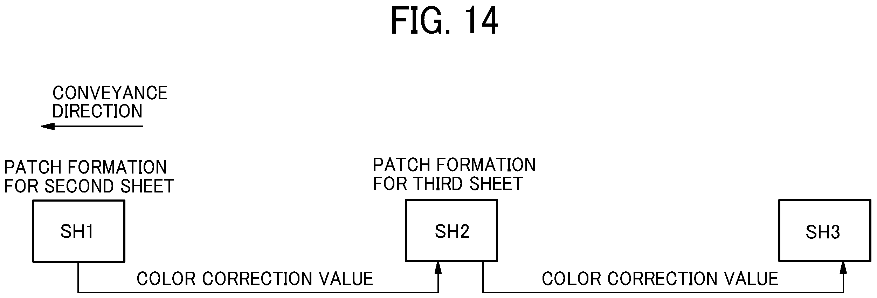

Next, a description is given of an image forming apparatus according to a fourth embodiment of the present disclosure, with reference to FIG. 14.

FIG. 14 is a diagram illustrating an operation performed by an image forming apparatus according to the fourth embodiment of the present disclosure.

In the present embodiment, the density information is acquired from the image information of the print image to be formed on a subsequent sheet, the sub-scanning width of each of the gradation patches P is determined from the acquired density information, and the gradation patches P having the sub-scanning widths different from each other are formed in the margin area SB of a preceding sheet.

For example, when a first sheet SH1 is assumed to be a preceding sheet, the density information is acquired from the image information of a print image for a second sheet SH2 as a subsequent sheet. Then, the sub-scanning width of each of the gradation patches P included in the gradation patch patterns 400 is determined from the acquired density information, and the gradation patches P having the sub-scanning widths different from each other are formed in the margin areas SB of the sheet SH1 as a preceding sheet.

Similarly, when the second sheet SH2 is a preceding sheet, the density information is acquired from the image information of a print image for a third sheet SH3 as a subsequent sheet. Then, the sub-scanning width of each of the gradation patches P included in the gradation patch patterns 400 is determined from the acquired density information, and the gradation patches P having the sub-scanning widths different from each other are formed in the margin areas SB of the second sheet SH2 as a preceding sheet.

That is, in the present embodiment, a secondary conveyed sheet of two sheets to be consecutively conveyed is assumed as a "subsequent sheet" and the density information is acquired from the print information for the subsequent sheet to form the gradation patches on the preceding sheet.

Then, the inspection device 240 reads the gradation patch patterns 400 on the first sheet SH1 and the color correction value is calculated according to the reading result, so that the color correction is performed for forming an image based on the print information on the second sheet SH2. Similarly, the inspection device 240 reads the gradation patch patterns 400 on the second sheet SH2 and the color correction value is calculated according to the reading result, so that the color correction is performed for forming an image based on the print information on the third sheet SH3.

According to the present disclosure, the real-time printing performance of the image forming apparatus is enhanced.

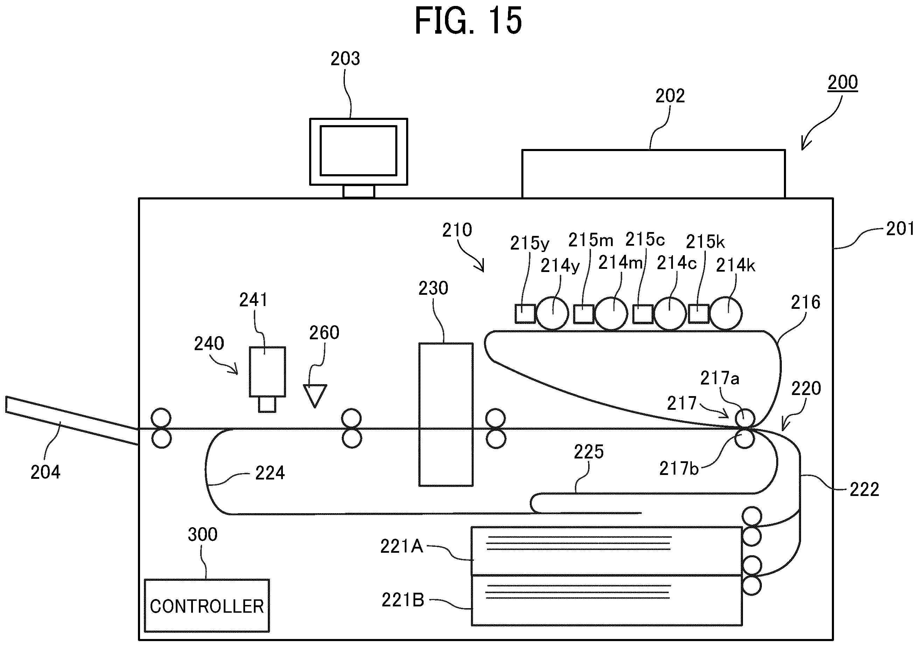

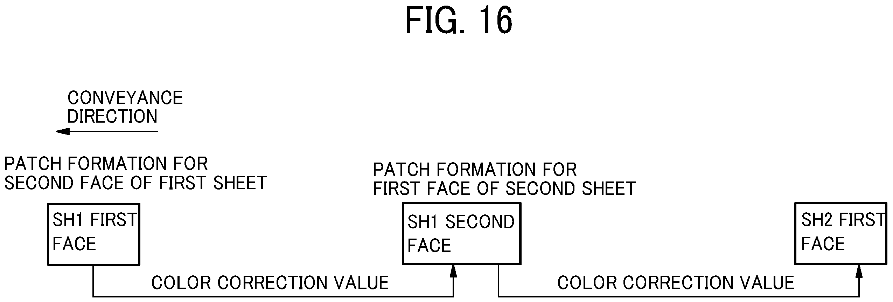

Next, a description is given of an image forming apparatus according to a fifth embodiment of the present disclosure, with reference to FIGS. 15 and 16.

FIG. 15 is a diagram illustrating an image forming apparatus according to the fifth embodiment of the present disclosure.

FIG. 16 is a diagram illustrating an operation performed by the image forming apparatus according to the fifth embodiment of the present disclosure.

In the image forming apparatus 200 according to the present embodiment, the sheet S that has passed the inspection device 240 is conveyed to the reversal passage 225 via the conveyance passage switcher 224. The inspection device 240 includes the inline sensor 241 that reads one side of sheet S.

By providing the conveyance passage in the image forming apparatus 200 having the above-described configuration, the gradation patch patterns 400 according to the fourth embodiment is achieved even when images are printed on both faces (first and second faces) of the sheet S. That is, as illustrated in FIG. 16, when the first face of the first sheet SH1 is assumed to be a preceding sheet, the density information is acquired from the image information of a print image for the second face of the first sheet SH1 as a subsequent sheet. Then, the sub-scanning width of each of the gradation patches P included in the gradation patch patterns 400 is determined from the acquired density information, and the gradation patches P having the sub-scanning widths different from each other are formed in the margin areas SB of the first face of the first sheet SH1 as a preceding sheet.

After the image is formed on the first face of the first sheet SH1, the inline sensor 241 reads the gradation patch patterns 400 on the first face of the first sheet SH1, and the first sheet SH1 is conveyed through the conveyance passage switcher 224 and the reversal passage 225 to form an image on the second face of the first sheet SH1.

At this time, assuming that the second face of the first sheet SH1 is assumed to be a preceding sheet and the first face of the second sheet SH2 is a subsequent sheet, the density information is acquired from the image information of a print image on the first face of the second sheet SH2 as in the above-described operation performed on the second face of the first sheet SH1 as a subsequent sheet. Then, the sub-scanning width of each of the gradation patches P included in the gradation patch patterns 400 is determined from the acquired density information, and the gradation patches P having the sub-scanning widths different from each other are formed in the margin areas SB of the second face of the first sheet SH1 as a preceding sheet.

After the image is formed on the second face of the first sheet SH1, the inline sensor 241 reads the gradation patch patterns 400 on the second face of the first sheet SH1, and the first sheet SH1 is ejected.

As described above, even when performing duplex printing, the image of the gradation patch patterns 400 are formed and corrected by assuming that, of two faces to be consecutively printed, the first printing face on which an image is printed first is assumed to be a preceding sheet and the second printing face on which an image is printed after the first printing face is assumed to be a subsequent sheet.

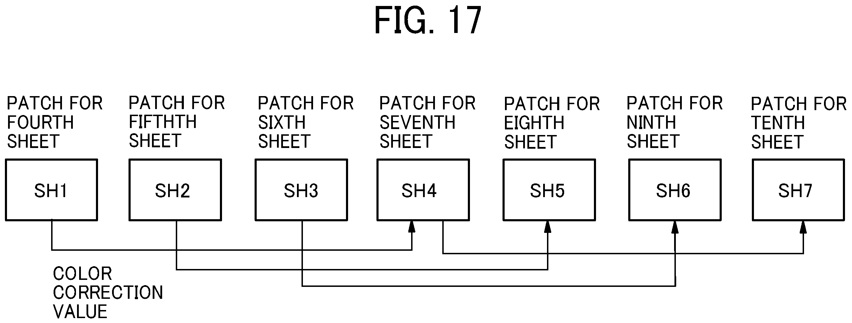

Next, a description is given of an image forming apparatus according to the fifth embodiment of the present disclosure, with reference to FIG. 17.

FIG. 17 is a diagram illustrating an operation performed by an image forming apparatus according to the fifth embodiment of the present disclosure.

In the present embodiment, the density information is acquired from the print information for a subsequent sheet that is two or more sheets away from the preceding sheet, so as to form the gradation patches P of the gradation patch patterns 400.

For example, when the first sheet SH1 is assumed to be a preceding sheet, the density information is acquired from the image information of a print image for a fourth sheet SH4 as a subsequent sheet. The fourth sheet SH4 is three sheets after the preceding sheet. Then, the sub-scanning width of each of the gradation patches P included in the gradation patch patterns 400 is determined from the acquired density information, and the gradation patches P having the sub-scanning widths different from each other are formed in the margin areas SB of the first sheet SH1 as a preceding sheet.

Similarly, when the second sheet SH2 is assumed to be a preceding sheet, the density information is acquired from the image information of a print image for a fifth sheet SH5 as a subsequent sheet. Then, the sub-scanning width of each of the gradation patches P included in the gradation patch patterns 400 is determined from the acquired density information, and the gradation patches P having the sub-scanning widths different from each other are formed in the margin areas SB of the second sheet SH2 as a preceding sheet.

Similarly, when the third sheet SH3 and the fourth sheet SH4 are each assumed to be a preceding sheet, the density information is acquired from the image information of a print image for a sixth sheet SH6 and a seventh sheet SH7, respectively, as a subsequent sheet. Then, the sub-scanning width of each of the gradation patches P included in the gradation patch patterns 400 is determined from the acquired density information, and the gradation patches P having the sub-scanning widths different from each other are formed in the margin areas SB of the third sheet SH3 and the fourth sheet SH4, respectively, as a preceding sheet.

Further, when the fifth sheet SH5, the sixth sheet SH6, and the seventh sheet SH7 are each assumed to be a preceding sheet, the density information is acquired from the image information of a print image for an eighth sheet, a ninth sheet, and a tenth sheet, respectively, as a subsequent sheet. Then, the sub-scanning width of each of the gradation patches P included in the gradation patch patterns 400 is determined from the acquired density information, and the gradation patches P having the sub-scanning widths different from each other are formed in the margin areas SB of the fifth sheet SH5, the sixth sheet SH6, and the seventh sheet SH7, respectively, as a preceding sheet.

As described above, in this example, a sheet that is conveyed three sheets after the sheet S as a preceding sheet is assumed to be a subsequent sheet. Under this condition, the density information is acquired from the image information of a print image for a subsequent sheet, the sub-scanning width of each of the gradation patches P included in the gradation patch patterns 400 is determined from the acquired density information, and the gradation patches P are formed in the margin areas SB of the sheet S as a preceding sheet.

In other words, in a similar manner to the fourth embodiment of the present disclosure as described above, when two sheets to be consecutively conveyed are assumed as a preceding sheet and a subsequent sheet, after the preceding sheet has reached the position of the inspection device 240, the correction values for the subsequent sheet are calculated. Therefore, in order to reflect the color correction on the subsequent page, the normal printing speed is decreased, that is, the interval (sheet interval) between the consecutively conveyed sheets S is increased. As a result, the productivity of the image forming apparatus is likely to be lowered.

In order to address this inconvenience, the preceding sheet and the subsequent sheet are set to be consecutively conveyed at the intervals that do not decrease the productivity of the image forming apparatus. In the operation illustrated in FIG. 17, the gradation patches P for the fourth sheet SH4 formed on the first sheet SH1 are read to reflect the correction result on the fourth sheet SH4 without decreasing the productivity of the image forming apparatus.

Note that the operation of the present embodiment is not limited to the operation in which the subsequent sheet is set to be a sheet that is conveyed three sheets after preceding sheet (that is an expression of the preceding sheet + 3) as illustrated in FIG. 17 but may include an operation in which the subsequent sheet satisfied the expression of (preceding sheet + m), where "m" is an integer of 2 or more.

As a result, the correction of an image on a sheet is performed without decreasing the productivity of the image forming apparatus, so that the color accuracy is obtained.

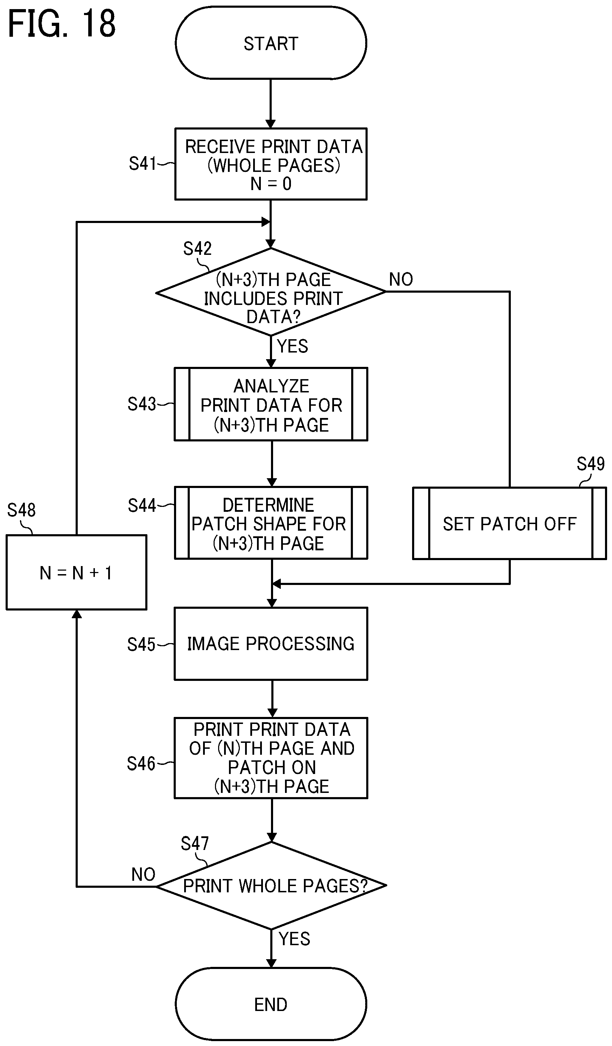

Next, a description is given of a printing process of gradation patch executed by a controller, according to the sixth embodiment of the present disclosure, with reference to FIG. 18.

FIG. 18 is a flowchart of a printing process of gradation patch pattern by the controller.

The printing process (image forming process) is turned on in response to execution of printing by a user, and the controller 300 receives print data for the whole pages and sets the page number as N = 0 (S41). Then, the controller 300 determines whether there are print data for the (N+3)th page (S42).

When there are print data for the (N+3)th page (YES in S42), the controller 300 analyses the print data for the (N+3)th page (S43), and determines the shape (patch shape) of the gradation patch patterns 400 to be printed on the (N+3)th page based on the analysis result (S44).

Then, the controller 300 executes general image processing and color correction calculated from the reading result of the gradation patches P of the gradation patch patterns 400 by the inspection device 240 (S45). Note that, when "N" is 1, 2, or 3, the controller 300 performs default color correction.

Then, the print image (print data) for the (N)th page and the image (patch image) of the gradation patch patterns 400 for the (N+3)th page are printed (S46). In other words, the controller 300 forms the print image for the (N)th page and the image of the gradation patches P having different widths from each other, of the gradation patch patterns 400 for the (N+3)th page. The gradation patch patterns 400 have the shape determined in step S44.

On the other hand, when there are no print data for the (N+3)th page (NO in S42), the controller 300 sets patch OFF (S49), and then moves to step S45.

In this case, the controller 300 executes regular image processing and color correction calculated from the reading result of the gradation patches P of the gradation patch patterns 400 by the inspection device 240 in steps S45 and S46 and does not form the gradation patches P when printing the print image (print data) for the (N)th page.

Thereafter, the controller 300 determines whether the whole print images (whole pages) have been printed (S47). When the whole print pages have not been printed (NO in S47), the page of the print image is indicated as N = (N + 1) (S48) and the process goes back to step S42. On the other hand, when the whole print pages have been printed (YES in S47), the printing process of the flowchart of FIG. 18 ends.

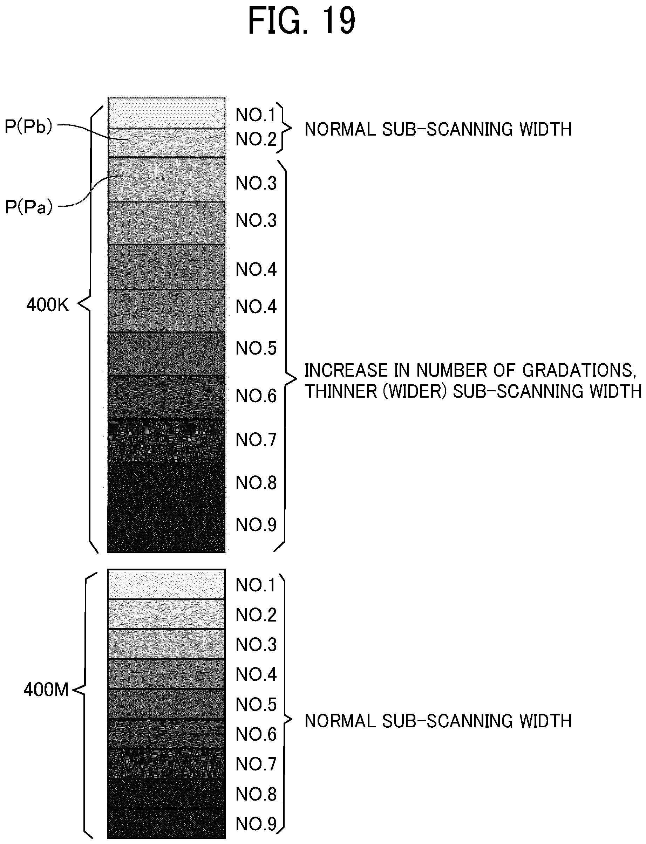

Next, a description is given of an image forming apparatus according to a seventh embodiment of the present disclosure, with reference to FIG. 19.

FIG. 19 is a diagram illustrating a gradation patch pattern of an image forming apparatus according to the seventh embodiment of the present disclosure.

In each of the above-described embodiments, the widths of the gradation patches P in one of the gradation patch patterns 400 are different from each other. On the other hand, for example, the widths of the gradation patch patterns 400K, 400C, 400M, and 400Y are different from each other in the present embodiment.

For example, in the gradation patch patterns illustrated in FIG. 19, the width of the whole gradation patch pattern 400K (Nos. 1 to 9) for the color of yellow is set to be greater than the width of the whole gradation patch pattern 400M (Nos. 1 to 9) for the color of magenta. Note that, in this example in FIG. 19, the number of gradations of the gradation patch pattern 400K is greater than the number of gradations of the gradation patch pattern 400M (400C and 400Y) or no gradation patch patterns 400 (400C and 400Y in FIG. 19) is formed.

Each of the above-described embodiments is not limited to the example of printing gradation patches on each sheet. For example, the gradation patch may be printed for each predetermined number of printed sheets. In a case in which gradation patches are formed per five (5) sheets, the gradation patches are formed on each preceding sheet based on the print image (print data) of the fifth sheet (for example, 10th sheet, 15th sheet) after the previous sheet having the gradation patches. In addition, when a print image (print data) satisfies a predetermined condition, the print image may be printed on a preceding sheet.

The present disclosure is not limited to specific embodiments described above, and numerous additional modifications and variations are possible in light of the teachings within the technical scope of the appended claims.

The effects described in the embodiments of this disclosure are listed as the examples of preferable effects derived from this disclosure, and therefore are not intended to limit to the embodiments of this disclosure.

The embodiments described above are presented as an example to implement this disclosure. The embodiments described above are not intended to limit the scope of the invention.

## Claims

1. An image forming apparatus (200) comprising:
an image forming device (210) configured to form an image on a sheet (S); and
a control unit (300) configured to:
acquire density information from image information of the image formed on the sheet (S);
determine a width of each of a plurality of gradation patches (P) to be formed in a conveyance direction of the sheet (S) based on the density information; and
cause the image forming device (210) to form the plurality of gradation patches (P) having different widths from each other in the conveyance direction of the sheet (S), in a margin area (SB, SC, SD) of the sheet (S), wherein
the plurality of gradation patches (P) includes first gradation patches (P) each including a priority gradation and second gradation patches (P) each including a non-priority gradation that is not the priority gradation, and
wherein a width of each of the first gradation patches (P) is greater than a width of each the second gradation patches (P).

2. The image forming apparatus (200) according to claim 1,
wherein the control unit (300) is configured to define the priority gradation based on the image formed on the sheet (S) and a width of the margin area (SB, SC, SD) on the sheet (S).

3. The image forming apparatus (200) according to claim 2,
wherein print data on the gradation patches (P) formed per a given number of sheets (S) include data on the image formed on the sheet (S) and the width of the margin area (SB, SC, SD) on the sheet (S).

4. The image forming apparatus (200) according to claim 1,
wherein the plurality of gradation patches (P) includes first gradation patches (P) of a priority color and second gradation patches (P) of a non-priority color that is not the priority color,
wherein a difference in gradations of the first gradation patches (P) is smaller than a difference in gradations of the second gradation patches (P), and
wherein a number of the first gradation patches (P) is greater than a number of the second gradation patches (P).

5. The image forming apparatus (200) according to claim 1,
wherein the plurality of gradation patches (P) includes first gradation patches (P) of a priority color and second gradation patches (P) of a non-priority color that is not the priority color, and
wherein the control unit (300) is configured not to form the second gradation patches (P) of the non-priority color.

6. The image forming apparatus (200) according to any one of claims 1 to 5, wherein adjacent gradation patches (P) in adjacent two different colors of gradation patches (P) of the plurality of gradation patches (P) have a smaller density difference in color than non-adjacent gradation patches (P) of a same color in the adjacent two different colors of gradation patches (P).

7. The image forming apparatus (200) according to any one of claims 1 to 6, wherein the control unit (300) is configured to:
acquire the density information from image information of an image to be formed on another sheet (SH2, SH3, SH4, SH5) that is conveyed after the sheet (S), and
cause the image forming device (210) to form the plurality of gradation patches (P) on the sheet (SH1, SH2) based on the density information.

8. The image forming apparatus (200) according to claim 7,
wherein the control unit (300) is configured to cause the image forming device (210) to form no gradation patch on the sheet (SH1, SH2) when there is no image to be formed on said another sheet (SH2, SH3, SH4, SH5).

9. The image forming apparatus (200) according to any one of claims 1 to 8, further comprising:
a reader (240) configured to read the plurality of gradation patches (P) on the sheet (S),
wherein the control unit (300) is configured to calculate a color correction value based on a reading result of the reader (240).

10. A method of forming a plurality of gradation patches (P), the method comprising:
acquiring (S13) density information from image information of an image formed on a sheet (S);
determining a width of each of the plurality of gradation patches (P) to be formed in a conveyance direction of the sheet (S), based on the density information; and
forming the plurality of gradation patches (P) having different widths from each other in the conveyance direction of the sheet (S), in a margin area (SB, SC, SD) of the sheet (S), wherein
the plurality of gradation patches (P) includes first gradation patches (P) each including a priority gradation and second gradation patches (P) each including a non-priority gradation that is not the priority gradation, and
wherein a width of each of the first gradation patches (P) is greater than a width of each the second gradation patches (P).

11. An evaluation chart for an image forming apparatus (200), the evaluation chart comprising:
a sheet (S);
an image formed in an image area (SA) on the sheet (S) by the image forming apparatus (200); and
a plurality of gradation patches (P) formed in an area outside the image area (SA) and having widths different from each other in a conveyance direction of the sheet (S), wherein
the widths of each of the plurality of gradation patches (P) is based on density information acquired from image information of the image formed in the image area (SA), wherein
the plurality of gradation patches (P) includes first gradation patches (P) each including a priority gradation and second gradation patches (P) each including a non-priority gradation that is not the priority gradation, and
wherein a width of each of the first gradation patches (P) is greater than a width of each the second gradation patches (P).

## Patentansprüche

1. Bilderzeugungseinrichtung (200), umfassend:
eine Bilderzeugungsvorrichtung (210), die dazu konfiguriert ist, ein Bild auf einem Bogen (S) zu erzeugen; und
eine Steuereinheit (300), die konfiguriert ist, zum:
Erfassen von Dichteinformationen aus Bildinformationen des auf dem Bogen (S) erzeugten Bildes;
Bestimmen einer Breite jedes einer Mehrzahl von Gradations-Patches (P), die in einer Förderrichtung des Blattes (S) auf Grundlage von den Dichteinformationen erzeugt werden sollen; und
Veranlassen der Bilderzeugungsvorrichtung (210) zum Erzeugen der Mehrzahl von Gradations-Patches (P) mit unterschiedlichen Breiten voneinander in der Förderrichtung des Bogens (S) in einer Randfläche (SB, SC, SD) des Bogens (S), wobei
die Mehrzahl von Gradations-Patches (P) erste Gradations-Patches (P), die jeweils eine Prioritätsgradation beinhalten, und zweite Gradations-Patches (P) beinhaltet, die jeweils eine Nicht-Prioritätsgradation beinhalten, die nicht die Prioritätsgradation ist, und
wobei eine Breite jedes der ersten Gradations-Patches (P) größer ist als eine Breite jedes der zweiten Gradations-Patches (P).

2. Bilderzeugungseinrichtung (200) nach Anspruch 1,
wobei die Steuereinheit (300) dazu konfiguriert ist, die Prioritätsgradation auf Grundlage des auf dem Bogen (S) zu erzeugenden Bildes und einer Breite der Randfläche (SB, SC, SD) auf dem Bogen (S) zu definieren.

3. Bilderzeugungseinrichtung (200) nach Anspruch 2,
wobei die Druckdaten auf den Gradations-Patches (P), die pro eine gegebene Anzahl von Bögen (S) erzeugt werden, Daten über das Bild, das auf dem Bogen (S) erzeugt wird, und die Breite der Randfläche (SB, SC, SD) auf dem Bogen beinhalten.

4. Bilderzeugungseinrichtung (200) nach Anspruch 1,
wobei die Mehrzahl von Gradations-Patches (P) erste Gradations-Patches (P) einer Prioritätsfarbe, und zweite Gradations-Patches (P) einer Nicht-Prioritätsfarbe beinhaltet, die nicht die Prioritätsfarbe ist,
wobei eine Differenz in den Gradationen der ersten Gradations-Patches (P) kleiner ist als eine Differenz in den Gradationen der zweiten Gradations-Patches (P), und
wobei eine Anzahl der ersten Gradations-Patches (P) größer ist als eine Anzahl der zweiten Gradations-Patches (P).

5. Bilderzeugungseinrichtung (200) nach Anspruch 1,
wobei die Mehrzahl von Gradations-Patches (P) erste Gradations-Patches (P) einer Prioritätsfarbe und zweite Gradations-Patches (P) einer Nicht-Prioritätsfarbe beinhaltet, die nicht die Prioritätsfarbe ist, und
wobei die Steuereinheit (300) dazu konfiguriert ist, die zweiten Gradations-Patches (P) der Nicht-Prioritätsfarbe zu erzeugen.

6. Bilderzeugungseinrichtung (200) nach einem der Ansprüche 1 bis 5,
wobei benachbarte Gradations-Patches (P) in benachbarten zwei verschiedenen Farben von Gradations-Patches (P) der Mehrzahl von Gradations-Patches (P) eine kleinere Dichtedifferenz in der Farbe als nicht-benachbarte Gradations-Patches (P) einer selben Farbe in den benachbarten zwei verschiedenen Farben von Gradations-Patches (P) aufweisen.

7. Bilderzeugungseinrichtung (200) nach einem der Ansprüche 1 bis 6,
wobei die Steuereinheit (300) konfiguriert ist, zum:
Erfassen der Dichteinformationen aus den Bildinformationen eines auf einem anderen Bogen (SH2, SH3, SH4, SH5) zu erzeugenden Bildes, das nach dem Bogen (S) gefördert wird, und
Veranlassen der Bilderzeugungsvorrichtung (210) zum Erzeugen der Mehrzahl von Gradations-Patches (P) auf dem Bogen (SH1, SH2) auf Grundlage der Dichteinformationen.

8. Bilderzeugungseinrichtung (200) nach Anspruch 7,
wobei die Steuereinheit (300) dazu konfiguriert ist, die Bilderzeugungsvorrichtung (210) zu veranlassen, keinen Gradations-Patch auf dem Bogen (SH1, SH2) zu erzeugen, wenn kein Bild auf dem anderen Bogen (SH2, SH3, SH4, SH5) erzeugt werden soll.

9. Bilderzeugungseinrichtung (200) nach einem der Ansprüche 1 bis 8, ferner umfassend:
ein Lesegerät (240), das dazu konfiguriert ist, die Mehrzahl von Gradations-Patches (P) auf dem Bogen (S) zu lesen,
wobei die Steuereinheit (300) dazu konfiguriert ist, einen Farbkorrekturwert auf Grundlage eines Leseergebnisses des Lesegeräts (240) zu berechnen.

10. Verfahren zum Erzeugen einer Mehrzahl von Gradations-Patches (P), wobei das Verfahren umfasst:
Erfassen (S13) von Dichteinformationen aus Bildinformationen eines auf einem Bogen (S) erzeugten Bildes;
Bestimmen einer Breite jedes der Mehrzahl von Gradations-Patches (P), die in einer Förderrichtung des Bogens (S) zu erzeugen sind, auf Grundlage der Dichteinformationen; und
Erzeugen der Mehrzahl von Gradations-Patches (P) mit unterschiedlichen Breiten voneinander in der Förderrichtung des Bogens (S) in einer Randfläche (SB, SC, SD) des Bogens (S), wobei
die Mehrzahl von Gradations-Patches (P) erste Gradations-Patches (P), die jeweils eine Prioritätsgradation beinhalten, und zweite Gradations-Patches (P) beinhaltet, die jeweils eine Nicht-Prioritätsgradation beinhalten, die nicht die Prioritätsgradation ist, und
wobei eine Breite jedes der ersten Gradations-Patches (P) größer ist als eine Breite jedes der zweiten Gradations-Patches (P).

11. Auswertungsfarbpalette für eine Bilderzeugungseinrichtung (200), wobei die Auswertungsfarbpalette umfasst:
einen Bogen (S);
ein Bild, das in einer Bildfläche (SA) auf dem Bogen (S) durch die Bilderzeugungseinrichtung (200) erzeugt wird; und
eine Mehrzahl von Gradations-Patches (P), die in einer Fläche außerhalb der Bildfläche (SA) erzeugt werden und in einer Förderrichtung des Bogens (S) unterschiedliche Breiten aufweisen, wobei
die Breiten jedes der Mehrzahl von Gradations-Patches (P) auf Dichteinformationen basieren, die aus Bildinformationen des in der Bildfläche (SA) erzeugten Bildes erfasst wurden, wobei
die Mehrzahl von Gradations-Patches (P) erste Gradations-Patches (P), die jeweils eine Prioritätsgradation beinhalten, und zweite Gradations-Patches (P) beinhaltet, die jeweils eine Nicht-Prioritätsgradation beinhalten, die nicht die Prioritätsgradation ist, und
wobei eine Breite jedes der ersten Gradations-Patches (P) größer ist als eine Breite jedes der zweiten Gradations-Patches (P).

## Revendications

1. Appareil de formation d'images (200) comprenant :
un dispositif de formation d'image (210) configuré pour former une image sur une feuille (S) ; et une unité de commande (300) configurée pour :
acquérir des informations de densité à partir d'informations d'image de l'image formée sur la feuille (S) ;
déterminer une largeur de chacune d'une pluralité de zones de gradation (P) à former dans une direction de transport de la feuille (S) sur la base des informations de densité ; et
amener le dispositif de formation d'image (210) à former la pluralité de zones de gradation (P) ayant des largeurs différentes les unes des autres dans la direction de transport de la feuille (S), dans une zone de marge (SB, SC, SD) de la feuille (S), dans lequel
la pluralité de zones de gradation (P) comprend des premières zones de gradation (P) comprenant chacune une gradation prioritaire et des secondes zones de gradation (P) comprenant chacune une gradation non prioritaire qui n'est pas la gradation prioritaire, et
dans lequel une largeur de chacune des premières zones de gradation (P) est supérieure à une largeur de chacune des secondes zones de gradation (P).

2. Appareil de formation d'image (200) selon la revendication 1,
dans lequel l'unité de commande (300) est configurée pour définir la gradation prioritaire sur la base de l'image formée sur la feuille (S) et d'une largeur de la zone de marge (SB, SC, SD) sur la feuille (S).

3. Appareil de formation d'image (200) selon la revendication 2,
dans lequel les données d'impression sur les zones de gradation (P) formées pour un nombre donné de feuilles (S) comprennent des données sur l'image formée sur la feuille (S) et la largeur de la zone de marge (SB, SC, SD) sur la feuille (S).

4. Appareil de formation d'images (200) selon la revendication 1,
dans lequel la pluralité de zones de gradation (P) comprend des premières zones de gradation (P) d'une couleur prioritaire et des secondes zones de gradation (P) d'une couleur non prioritaire qui n'est pas la couleur prioritaire,
dans lequel une différence de gradations des premières zones de gradation (P) est inférieure à une différence de gradations des secondes zones de gradation (P), et
dans lequel un nombre de premières zones de gradation (P) est supérieur à un nombre de secondes zones de gradation (P).

5. Appareil de formation d'images (200) selon la revendication 1,
dans lequel la pluralité de zones de gradation (P) comprend des premières zones de gradation (P) d'une couleur prioritaire et des secondes zones de gradation (P) d'une couleur non prioritaire qui n'est pas la couleur prioritaire, et
dans lequel l'unité de commande (300) est configurée pour ne pas former les secondes zones de gradation (P) de la couleur non prioritaire.

6. Appareil de formation d'images (200) selon l'une quelconque des revendications 1 à 5, dans lequel des zones de gradation adjacentes (P) dans deux couleurs différentes adjacentes de zones de gradation (P) de la pluralité de zones de gradation (P) ont une différence de densité plus petite en couleur que les zones de gradation (P) non adjacentes d'une même couleur dans les deux couleurs différentes adjacentes de zones de gradation (P).

7. Appareil de formation d'images (200) selon l'une quelconque des revendications 1 à 6, dans lequel l'unité de commande (300) est configurée pour :
acquérir les informations de densité à partir des informations d'image d'une image à former sur une autre feuille (SH2, SH3, SH4, SH5) qui est transportée après la feuille (S), et
amener le dispositif de formation d'image (210) à former la pluralité de zones de gradation (P) sur la feuille (SH1, SH2) sur la base des informations de densité.

8. Appareil de formation d'image (200) selon la revendication 7,
dans lequel l'unité de commande (300) est configurée pour amener le dispositif de formation d'image (210) à ne former aucune zone de gradation sur la feuille (SH1, SH2) lorsqu'il n'y a aucune image à former sur ladite autre feuille (SH2, SH3, SH4, SH5).

9. Appareil de formation d'images (200) selon l'une quelconque des revendications 1 à 8, comprenant en outre :
un lecteur (240) configuré pour lire la pluralité de zones de gradation (P) sur la feuille (S),
l'unité de commande étant configurée pour calculer une valeur de correction de couleur sur la base d'un résultat de lecture du lecteur (240).

10. Procédé de formation d'une pluralité de zones de gradation (P), le procédé comprenant les étapes consistant à :
acquérir (S13) des informations de densité à partir d'informations d'image d'une image formée sur une feuille (S) ;
déterminer une largeur de chacune de la pluralité de zones de gradation (P) à former dans une direction de transport de la feuille (S), sur la base des informations de densité ; et
former la pluralité de zones de gradation (P) ayant des largeurs différentes les unes des autres dans la direction de transport de la feuille (S), dans une zone de marge (SB, SC, SD) de la feuille (S),
dans lequel la pluralité de zones de gradation (P) comprend des premières zones de gradation (P) comprenant chacune une gradation prioritaire et des secondes zones de gradation (P) comprenant chacune une gradation non prioritaire qui n'est pas la gradation prioritaire, et
dans lequel une largeur de chacune des premières zones de gradation (P) est supérieure à une largeur de chacune des secondes zones de gradation (P).

11. Tableau d'évaluation pour un appareil de formation d'images (200), le tableau d'évaluation comprenant :
une feuille (S) ;
une image formée dans une zone d'image (SA) sur la feuille (S) par l'appareil de formation d'images (200) ; et
une pluralité de zones de gradation (P) formées dans une zone à l'extérieur de la zone d'image (SA) et ayant des largeurs différentes les unes des autres dans une direction de transport de la feuille (S),
dans lequel la largeur de chacune de la pluralité de zones de gradation (P) est basée sur des informations de densité acquises à partir d'informations d'image de l'image formée dans la zone d'image (SA),
dans lequel la pluralité de zones de gradation (P) comprend des premières zones de gradation (P) comprenant chacune une gradation prioritaire et des secondes zones de gradation (P) comprenant chacune une gradation non prioritaire qui n'est pas la gradation prioritaire, et
dans lequel une largeur de chacune des premières zones de gradation (P) est supérieure à une largeur de chacune des secondes zones de gradation (P).
